# EUROPEAN PATENT SPECIFICATION

(11) **EP 3 743 987 B1**
(45) Date of publication and mention of the grant of the patent: **05.06.2024**
(21) Application number: 18701481.6
(22) Date of filing: 25.01.2018
(51) Int. Cl.: H02P 6/26, H02K 29/08, H02P 1/46, H02P 25/04, H02P 6/16, H02P 6/22

(54) **ELECTRONICALLY COMMUTATED ELECTRIC MOTOR**
ELEKTRONISCH KOMMUTIERTER ELEKTROMOTOR
MOTEUR ÉLECTRIQUE À COMMUTATION ÉLECTRONIQUE

(43) Date of publication of application: 02.12.2020
(73) Proprietor: Pierburg Pump Technology GmbH, 41460 Neuss (DE)
(72) Inventor: HELMIS, Martin, 41464 Neuss (DE); BÜRGER, Frank, 52379 Langerwehe (DE); OBERHOFF, Stefan, 40477 Düsseldorf (DE)
(74) Representative: terpatent Patentanwälte und European Patent Attorneys ter Smitten Eberlein -Van Hoof
(86) International application number: PCT/EP2018/051862
(87) International publication number: WO 2019/145038

(56) References cited:
- EP-A1- 2 148 425
- WO-A1-97/33364
- US-A1- 2009 001 916

## Description

The invention is directed to an electronically commutated electric motor and a method for controlling the same.

Electronically commutated electric motors are provided with a stator with at least one stator coil, a permanent magnet rotor rotatable relative to the stator about an axis of rotation thereby generating a revolving excitation field, and with a motor control unit energizing the stator coil to drive the motor rotor. The motor control unit is triggered by a trigger signal corresponding to the rotational motor rotor position.

The rotational motor rotor position can be, for example, detected by analyzing the counter-electromotive force (CEMF) generated in the stator coil by the revolving magnetic rotor excitation field. But preferably, the motor is provided with at least one magnetic field sensor detecting the revolving magnetic rotor excitation field.

EP 2 916 108 A1 discloses an electronically commutated electric motor provided with three magnetic field sensors. A complex evaluation unit analyzes the three sensor signals and provides a trigger signal corresponding to the rotational motor rotor position. The plurality of sensors allows an accurate determination of the rotational motor rotor position.

While the period of the trigger signal corresponds to the rotational speed of the motor rotor, the phase of the trigger signal and, as a result, the exact trigger point can be varied to optimize the motor rotor drive. In particular, different trigger points are required for an efficient motor start and for an efficient nominal operation of the motor. Electronically commutated motors are normally provided with a complex and costly electronics to determine the motor working point and to provide the optimal trigger point for the present working point of the motor.

WO 97/33364 A1 discloses an electronically commutated electric motor provided with two magnetic field sensors which are arranged circumferentially spaced to each other. The trigger signals of both magnetic field sensors are provided to a motor control unit simultaneously, wherein the motor control unit is configured to interrupt an energization of a stator coil between a trigger pulse of the first magnetic field sensor and a trigger pulse of the second magnetic field sensor in order to avoid an electric overload of semiconductor switches of a power electronics.

US 2009/0001916 A1 and EP 2 148 425 A1 both disclose an electronically commutated electric motor provided with at least two magnetic field sensors which are arranged circumferentially spaced to each other. The electric motor comprises a switch unit which is configured to provide a motor control unit with the trigger signal of one magnetic field sensor during a starting phase of the electric motor, and to provide the motor control unit with the trigger signal of another magnetic field sensor during nominal operation of the electric motor.

It is an object of the invention to provide a simple and cost-efficient electronically commutated electric motor allowing a reliable motor start and an efficient nominal operation of the motor.

This object is achieved with an electronically commutated electric motor with the features of claim 1 or with a method for controlling the start of an electronically commutated electric motor with the features of claim 7.

The electronically commutated electric motor according to the invention is provided with a stator with a stator body and a single stator coil and with a permanent magnet rotor rotatable relative to the stator about an axis of rotation. The stator with the single stator coil allows a very compact and cost-efficient embodiment of the motor. The rotor comprises two opposite magnet poles separated by a rotor pole-separation line and generating a revolving rotor excitation field. The rotor can be realized as a preferably ferromagnetic rotor body with separate permanent magnets, but can, alternatively be provided as one single permanently magnetized rotor body. The magnetic rotor has rotor positions featuring a minimum magnetic reluctance for the motor rotor excitation field and, as a result, a magnetic cogging torque of zero. The corresponding magnetic rotor rest positions are positions in relation to the motor stator which are defined by the projection of the rotors magnetic poles centerline onto the stator body in the zero-cogging-torque rotor positions, wherein the rotors magnetic poles centerline is substantially perpendicular to the rotor pole-separation line. For continuously driving the motor rotor, the stator coil polarity must be commutated after the motor rotor passes its zero-cogging-torque position.

The electronically commutated electric motor according to the invention is also provided with a motor control unit driving the stator coil. The motor energizing device is triggered by a trigger signal corresponding to the rotational motor rotor position to generate a revolving stator field driving the motor rotor. The motor energizing device comprises several power semiconductors for commutating the electric energy driving the stator coil.

The electronically commutated electric motor according to the invention is also provided with two static magnetic field sensors, namely a starting-operation magnetic field sensor and a nominal-operation magnetic field sensor. Each magnetic field sensor generates a trigger signal corresponding to the local intensity of the revolving excitation field generated by the rotating motor rotor. The two magnetic field sensors are positioned spaced to each other so that they detect the revolving rotor excitation field at different circumferential positions. As a result, the trigger signals provided by the starting-operation magnetic field sensor and the nominal-operation magnetic field sensor provide the same signal period but different signal phases. The starting-operation magnetic field sensor is positioned so that the provided trigger signal has a signal phase which allows efficiently starting the motor rotor. The nominal-operation magnetic field sensor is positioned so that the provided trigger signal has a signal phase which allows efficiently driving the motor rotor during nominal operation. The magnetic field sensors of the electronically commutated electric motor according to the invention are in particular arranged in that way that, with respect to the rotor rotational direction, the nominal-operation magnetic field sensor is positioned before a magnetic rotor rest position and the starting-operation magnetic field sensor is positioned after the same magnetic rotor rest position.

The stator has a defined electric time constant depending on the stator coil inductance and the stator coil resistance. Caused by this electric time constant, the commutation of the stator coil polarity is delayed with respect to the commutation of the electric energy driving the stator coil. For low rotational speeds of the motor rotor, in particular occurring during the motor start, the delay is negligible so that the electric commutation must be executed after the motor rotor passes the magnetic rest position. As a result, the starting-operation magnetic field sensor is positioned after the magnetic rotor rest position with respect to the rotor rotational direction. For higher rotational speeds of the motor rotor, in particular occurring during nominal motor operation, the delay must be considered so that the electric commutation must be executed before the motor rotor passes the magnetic rest position. As a result, the nominal-operation magnetic field sensor is positioned before the magnetic rotor rest position with respect to the rotor rotational direction.

The electronically commutated electric motor according to the invention is also provided with a switch unit which is electrically connected with the two magnetic field sensors, namely with the starting-operation magnetic field sensor and the nominal-operation magnetic field sensor, and is electrically connected with the motor control unit. The switch unit features two switch states, a starting-operation switch state and a nominal-operation switch state. During the starting-operation switch state, the switch unit provides only the trigger signal of the starting-operation magnetic field sensor to the motor control unit, and during the nominal-operation switch state, the switch unit provides only the trigger signal of the nominal-operation magnetic field sensor to the motor control unit. The switch unit comprises an analog operation mode control element controlling the present switch state of the switch unit and, as a result, controlling which of the two magnetic field sensor trigger signals is provided to the motor control unit. The term "analog" in this context means that the operation mode control element is provided by an analog electric circuit, i.e. the operation mode control element comprises only analog components. In particular, the operation mode control element does not contain any microcontroller. The switch unit is electrically simple, reliable and cost-effective. The invention includes an alternating ON/OFF switching of the two magnetic field sensors by the switching unit so that during the starting-operation switch state only the starting-operation magnetic field sensor is powered and generates a trigger signal and during the nominal-operation switch state only the nominal-operation magnetic field sensor is powered and generates a trigger signal.

During the motor start, the switch unit is in the starting-operation switch state so that the trigger signal of the starting-operation magnetic field sensor is provided to the motor control unit. As a result, the motor control unit starts energizing the stator coils triggered by the trigger signal of the starting-operation magnetic field sensor featuring a signal phase for an efficient motor start. Depending on a control parameter which is defined by the setup of the operation mode control element, the switch unit is switched to the nominal-operation switch state so that the trigger signal of the nominal-operation magnetic field sensor is provided to the motor control unit. The control parameter can be, for example, a time or a rotor rotational frequency. As a result, the motor control unit is provided with a trigger signal allowing an efficient nominal operation of the motor.

The combination of the two magnetic field sensors and the switch unit with the analog operation mode control element allows an efficient motor start and also an efficient nominal operation of the electronically commutated electric motor. No complex and costly additional electronics or microcontroller is required to generate the operation point dependent trigger signal.

In a preferred embodiment of the invention, the operation mode control element is a timer element time-dependently controlling the switch state of the switch unit. The timer element is provided to switch the switch unit after expiration of a defined time span. This allows a very simple embodiment of the operation mode control element requiring only very few analog components.

Preferably, the static magnetic field sensors, namely the starting-operation magnetic field sensor and the nominal-operation magnetic field sensor, are positioned radially outwardly of the motor rotor preferably at the same radius. This allows detecting the radial component of the motor rotor excitation field and, as a result, allows an accurate determination of the motor rotor rotational position. More preferably, the static magnetic field sensors are positioned close to the motor rotor to achieve a good signal-to-noise ratio.

In a preferred embodiment of the invention, the magnetic field sensors are provided as Hall sensors. Hall sensors are normally provided with a primary evaluation unit featuring noise suppression and generating a rectangular trigger signal. No additional electronics is required to generate the trigger signal.

Preferably, the switch unit comprises at least two semiconductor switches. This allows a simple and compact embodiment of the switch unit.

In a preferred embodiment of the invention, the switch unit analog operation mode control element comprises a resistor and a capacitor. This allows a very simple and reliable electric realization of the analog operation mode control element.

The method for controlling the start of an electronically commutated electric motor according to the invention comprises the following steps:
- Starting the switch unit so that only the trigger signal of the starting-operation magnetic field sensor is provided to the motor control unit,
- starting the analog operation mode control element of the switch unit,
- energizing the stator coil triggered by the trigger signal of the starting-operation magnetic field sensor until the switch unit analog operation mode control element switches,
- switching the switch unit so that only the trigger signal of the nominal-operation magnetic field sensor is provided to the motor control unit, and
- energizing the stator coil triggered by the trigger signal of the nominal-operation magnetic field sensor.

As a result, during the motor start, the motor control unit is provided with the starting-operation trigger signal allowing an efficient starting of the motor, and during the nominal motor operation, the motor control unit is provided with the nominal-operation trigger signal allowing an efficient nominal operation of the motor. The switching between the starting-operation mode and the nominal-operation mode occurs depending on a control parameter which is defined by the setup of the analog operation mode control element. For example, the operation mode control element can switch the switch unit after expiration of a defined starting-phase time span or after reaching a defined rotor rotational frequency.

An embodiment of the invention is described with reference to the accompanying drawings, wherein
figure 1 shows a schematic drawing of an electronically commutated electric motor according to the invention,
figure 2 shows a schematic circuit diagram of an embodiment of a switch unit of the electronically commutated motor of figure 1, and
figure 3 shows an electric circuit diagram of an alternative analog operation mode control element of the switch unit of figure 2.

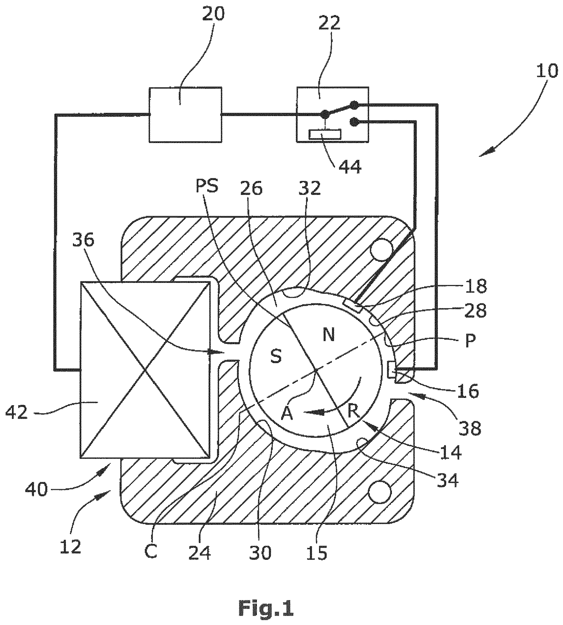

Figure 1 shows an electronically commutated electric motor 10 comprising a motor stator 12, a permanent magnet motor rotor 14, a starting-operation magnetic field sensor 16, a nominal-operation magnetic field sensor 18, a motor control unit 20 and a switch unit 22.

The motor stator 12 is provided with a non-symmetric stator body 24 with an axial rotor opening 26. The stator body 24 defines two diametrically opposed stator poles 28,30. The rotor opening 26 is provided with two axial recesses 32,34 to define and ensure a preferred rotational direction R of the motor rotor 14. The stator poles 28,30 are separated by two pole separation gaps 36,38 which are arranged exactly diametrically to each other with respect to a motor rotor axis A. The stator body 24 is provided with a lateral bridge portion 40 mechanically and magnetically connecting the two stator poles 28,30. The motor stator 12 is also provided with a single and satellite-like stator coil 42 being coiled around the stator body bridge portion 40.

The motor rotor 14 is positioned in the stator body rotor opening 26 and is rotatable relative to the motor stator 12 about the motor rotor axis A. The motor rotor 14 is provided as single rotor body 15 of a permanently magnetized ferromagnetic material. The motor rotor 14 is diametrically magnetized thereby defining two magnetic poles N,S generating a magnetic excitation field. The motor rotor 14 has a position in which the cogging torque being effective with respect to the motor rotor 14 is zero. In this zero-cogging-torque rotor position, the projection of the magnetic poles centerline C being substantially perpendicular to the pole-separation line PS onto the stator body 24 defines a magnetic rotor rest position P at the stator body 24.

Both magnetic field sensors 16,18 are provided as a Hall sensor. The magnetic field sensors 16,18 are attached to the stator body 24 and are electrically connected with the switch unit 22. The magnetic field sensors 16,18 are positioned at the same radial distance to the motor rotor axis A.

The starting-operation magnetic field sensor 16 is positioned close to the stator pole separation gap 38 and after the magnetic rotor rest position P with respect to the rotational direction R of the motor rotor 14. The nominal-operation magnetic field sensor 18 is positioned before the magnetic rotor rest position P with respect to the rotational direction R of the motor rotor 14.

The starting-operation magnetic field sensor 16 generates a starting-operation trigger signal TSO, and the nominal-operation magnetic field sensor 18 generates a nominal-operation trigger signal TNO. Both trigger signals TSO,TNO have the same signal period corresponding to the rotational speed of the motor rotor 14. However, the trigger signals TSO,TNO have different signal phases caused by the different circumferential position of the magnetic field sensors 16,18. The starting-operation trigger signal TSO provides a phase allowing an efficient start of the electric motor 10, and the nominal-operation trigger signal TNO provides a phase allowing an efficient drive of the motor rotor 14 during nominal operation of the electric motor 10.

The motor control unit 20 is electrically connected with the switch unit 22 and with the stator coil 42. The motor control unit 20 energizes the stator coil 42 for driving the motor rotor 14. The motor control unit 20 is triggered by a trigger signal TSO,TNO being provided by the switch unit 22 to generate a revolving stator field.

The switch unit 22 is electrically connected with the starting-operation magnetic field sensor 16, the nominal-operation magnetic field sensor 18 and with the motor control unit 20. The switch unit 20 provides two switch states, a starting-operation switch state SSO and a nominal-operation switch state SNO. During the starting-operation switch state SSO, the switch unit 20 provides the starting-operation trigger signal TSO generated by the starting-operation magnetic field sensor 16 to the motor control unit 20. During the nominal-operation switch state SNO, the switch unit 20 provides the nominal-operation trigger signal TNO generated by the nominal-operation magnetic field sensor 18 to the motor control unit 20.

The switch unit 22 comprises an analog operation mode control element 44. In the present embodiment, the analog operation mode control element 44 is a timer element controlling time-dependently the switch state SSO,SNO of the switch unit 22. The switch unit 22 is in the starting-operation switch state SSO during the start of the motor 10, so that the starting-operation trigger signal TSO is provided to the motor control unit 20. As a result, the motor control unit 20 energizes the stator coil 42 triggered by the trigger signal TSO with a phase allowing an efficient motor start.

After expiration of a defined starting-phase time span, the operation mode control element 44 switches the switch unit 22 to the nominal-operation switch state SNO so that the nominal-operation trigger signal TNO is provided to the motor control unit 20. As a result, the motor control unit 20 energizes the stator coil 42 triggered by the trigger signal TNO with a phase allowing an efficient nominal drive during the nominal operation of the motor 10.

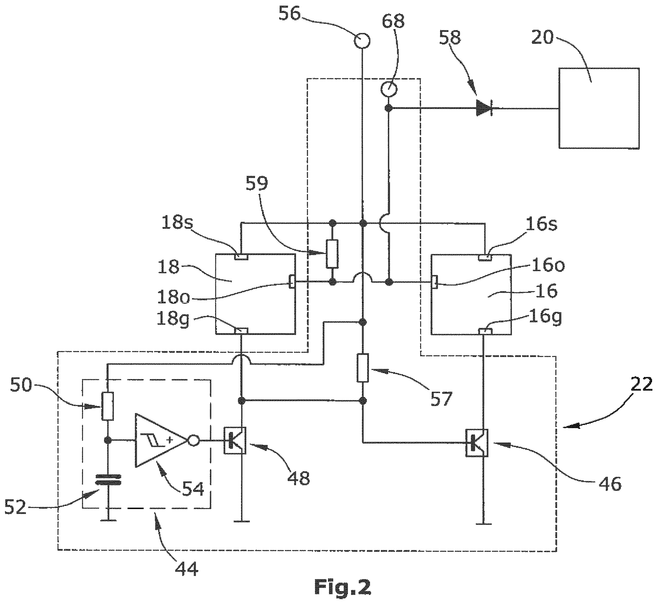

Figure 2 shows a schematic circuit diagram of the switch unit 22 and of the electric connections with the two magnetic field sensors 16,18 and the motor control unit 20.

The switch unit 22 comprises two semiconductor switches 46,48, a resistor 50, a capacitor 52 and a comparator 54. The resistor 50, the capacitor 52 and the comparator 54 provide the operation mode control element 44 of the switch unit 22.

The input of the first semiconductor switch 46 is electrically connected with an electric ground, the output of the semiconductor switch 46 is electrically connected with a ground terminal 16g of the starting-operation magnetic field sensor 16, and the control input of the semiconductor switch 46 is electrically connected with a supply terminal 56 via a resistor 57.

The input of the second semiconductor switch 48 is electrically connected with the electric ground, the output of the semiconductor switch 48 is electrically connected with a ground terminal 18g of the nominal-operation magnetic field sensor 18, and the control input of the semiconductor switch 48 is electrically connected with the output of the comparator 54.

The input of the resistor 50 is electrically connected with the supply terminal 56. The output of the resistor 50 is electrically connected with the input of the comparator 54 and with the input of the capacitor 52. The output of the capacitor 52 is electrically connected with the electric ground.

The two magnetic field sensors 16,18 are electrically connected with the supply terminal 56 via corresponding supply voltage terminals 16s,18s to supply the magnetic field sensors 16,18 with electric energy. Output terminals 16o,18o of the two magnetic field sensor 16,18 are electrically connected with the motor control unit 20 via a diode 58 and with the supply terminal 56 via a resistor 59.

If the electric motor 10 is started, a supply voltage VS is provided to the supply terminal 56 and thereby to the magnetic field sensors 16,18 and via the resistor 57 to the control input of the first semiconductor switch 46. As a result, the first semiconductor switch 46 is switched on to thereby electrically connect the starting-operation magnetic field sensor 16 with the electric ground so that the starting-operation magnetic field sensor 16 is supplied with electric energy. As a result, the starting-operation magnetic field sensor 16 generates the starting-operation trigger signal TSO being provided to the motor control unit 20.

Concurrently, the resistor 50 and the capacitor 52 are energized so that the capacitor 52 starts being charged. After the starting-phase time span defined by the capacity of the capacitor 52 and by the resistance of the resistor 50, the charge of the capacitor 52 is sufficient to trigger the comparator 54 thereby energizing the control input of the second semiconductor switch 48. As a result, the second semiconductor switch 48 is switched on thereby connecting the nominal-operation magnetic field sensor 18 with the electric ground so that the nominal-operation magnetic field sensor 18 is supplied with electric energy.

The switched-on second semiconductor switch 48 also connects the control input of the first semiconductor switch 46 with the electric ground so that the first semiconductor switch 46 is switched off thereby interrupting the energy supply of the starting-operation magnetic field sensor 16. As a result, only the nominal-operation magnetic field sensor 18 is energized and provides the nominal-operation trigger signal TNO to the motor control unit 20.

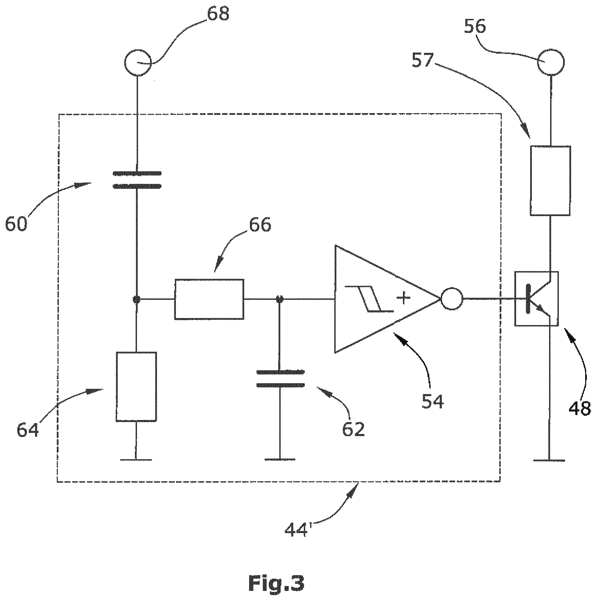

Figure 3 shows a schematic circuit diagram of an alternative analog operation mode control element 44' comprising the comparator 54, two capacitors 60,62, and two resistors 64,66.

The input of the first capacitor 60 is electrically connected with a rotor speed terminal 68 and the output of the first capacitor 60 is electrically connected with the resistors 64,66. The output of the ground resistor 64 is electrically connected with the electric ground. The output of the second resistor 66 is electrically connected with the input of the comparator 54 and with the ground capacitor 62. The output of the ground capacitor 62 is electrically connected with the electric ground. The output of the comparator 54 is electrically connected with the control input of the semiconductor switch 48 of figure 2.

The rotor speed terminal 68 is provided with a rotor speed signal with a frequency corresponding to the rotational frequency of the motor rotor 14. If the rotor rotational speed and, as a result, the frequency of the rotor speed signal reaches a predefined frequency threshold value, the charge voltage of the ground capacitor 62 is sufficiently high to trigger the comparator 54 thereby energizing the control input of the second semiconductor switch 48. As a result, the second semiconductor switch 48 is switched on thereby connecting the nominal-operation magnetic field sensor 18 with the electric ground so that the nominal-operation magnetic field sensor 18 is supplied with electric energy. The frequency threshold value is defined by the capacitances of the capacitors 60,62 and by the resistances of the resistors 64,66.

### Reference list

- 10: electronically commutated electric motor
- 12: motor stator
- 14: permanent magnet motor rotor
- 15: rotor body
- 16: starting-operation magnetic field sensor
- 18: nominal-operation magnetic field sensor
- 16g, 18g: magnetic field sensor ground terminal
- 16o, 18o: magnetic field sensor output terminal
- 16s, 18s: magnetic field sensor supply voltage terminal
- 20: motor control unit
- 22: switch unit
- 24: stator body
- 26: rotor opening
- 28,30: stator poles
- 32,34: axial recesses
- 36,38: pole separation gaps
- 40: bridge portion
- 42: stator coil
- 44,44': analog operation mode control elements
- 46,48: semiconductor switches
- 50: resistor
- 52: capacitor
- 54: comparator
- 56: supply terminal
- 57: resistor
- 58: diode
- 59: resistor
- 60,62: capacitors
- 64,66: resistors
- 68: rotor speed terminal
- A: motor rotor axis
- C: magnetic poles centerline
- N,S: magnetic rotor poles
- P: magnetic rotor rest position
- PS: rotor pole-separation line
- R: motor rotor rotational direction
- SSO: starting-operation switch state
- SNO: nominal-operation switch state
- TSO: starting-operation trigger signal
- TNO: nominal-operation trigger signal

## Claims

1. An electronically commutated electric motor (10) comprising
a stator (12) with a stator body (24) and a single stator coil (42),
a permanent magnet rotor (14) rotatable relative to the stator (14) about an axis of rotation (A) thereby generating an revolving excitation field, the permanent magnet rotor (14) comprising two magnetic rotor poles (N,S) separated by a rotor pole-separation line (PS) and a magnetic poles centerline (C) which is substantially perpendicular to the rotor pole-separation line (PS), **characterized in that**
a static starting-operation magnetic field sensor (16) and a static nominal-operation magnetic field sensor (18) both being arranged spaced to each other **in that** way that the nominal-operation magnetic field sensor (18) is positioned before a magnetic rotor rest position (P), which is defined by the projection of the magnetic poles centerline (C) onto the stator body (24) in a zero-cogging-torque rotor position of the permanent magnet rotor (14), and the starting-operation magnetic field sensor (16) is positioned after the same magnetic rotor rest position (P), the magnetic field sensors (16,18) locally detecting the revolving excitation field and generating corresponding trigger signals (TSO,TNO),
a motor control unit (20) energizing the stator coil (42) for driving the motor rotor (14), the motor control unit (20) being triggered by a trigger signal (TSO,TNO) provided by one of the magnetic field sensors (16,18) to generate a revolving stator field, and
a switch unit (22) with an analog operation mode control element (44,44'), the switch unit (22) being electrically connected with the two magnetic field sensors (16,18) and with the motor control unit (20),
wherein the switch unit (22) provides either the trigger signal (TSO) of the starting-operation magnetic field sensor (16) or the trigger signal (TNO) of the nominal-operation magnetic field sensor (18) to the motor control unit (20), and wherein the switching state (SSO,SNO) of the switch unit (22) is controlled by the analog operation mode control element (44,44').

2. The electronically commutated electric motor (10) of claim 1, wherein the operation mode control element (44) is a timer element time-dependently controlling the switch state of the switch unit (22).

3. The electronically commutated electric motor (10) of any preceding claim, wherein the two static magnetic field sensors (16,18) are positioned radially outwardly of the motor rotor (14) preferably at the same radius.

4. The electronically commutated electric motor (10) of any preceding claim, wherein the magnetic field sensors (16,18) are Hall sensors.

5. The electronically commutated electric motor (10) of any preceding claim, wherein the switch unit (22) comprises at least two semiconductor switches (46,48).

6. The electronically commutated electric motor (10) of any preceding claim, wherein the switch unit operation mode control element (44,44') comprises a resistor (50,64,66) and a capacitor (52,60,62).

7. A method for controlling the start of an electronically commutated electric motor (10) with the features of claim 1, comprising the following motor starting steps:
• Starting the switch unit (22) so that only the trigger signal (TSO) of the starting-operation magnetic field sensor (16) is providedto the motor control unit (20),
• starting the operation mode control element (44,44') of the switch unit (22),
• energizing the stator coil (42) triggered by the trigger signal (TSO) of the starting-operation magnetic field sensor (16) until the switch unit operation mode control element (44,44') switches,
• switching the switch unit (22) so that only the trigger signal (TNO) of the nominal-operation magnetic field sensor (18) is provided to the motor control unit (20), and
• energizing the stator coil (42) triggered by the trigger signal (TNO) of the nominal-operation magnetic field sensor (18).

## Patentansprüche

1. Elektronisch kommutierter Elektromotor (10) umfassend
einen Stator (12) mit einem Statorkörper (24) und einer einzigen Statorspule (42),
einen Permanentmagnetrotor (14), der relativ zu dem Stator (14) um eine Drehachse (A) drehbar ist, wodurch ein rotierendes Erregerfeld erzeugt wird, wobei der Permanentmagnetrotor (14) zwei magnetische Rotorpole (N, S), die durch eine Rotorpoltrennlinie (PS) getrennt sind, und eine Magnetpolmittellinie (C), die im wesentlichen senkrecht zu der Rotorpoltrennlinie (PS) verläuft, umfasst,
**gekennzeichnet durch**
einen statischen Startbetriebmagnetfeldsensor (16) und einen statischen Nennbetriebmagnetfeldsensor (18), die beide derart beabstandet zueinander angeordnet sind, dass der Nennbetriebmagnetfeldsensor (18) vor einer magnetischen Rotorruheposition (P), die durch die Projektion der Magnetpolmittellinie (C) auf den Statorkörper (24) in einer rastmomentfreien Rotorposition des Permanentmagnetrotors (14) definiert ist, positioniert ist, und der Startbetriebmagnetfeldsensor (16) nach der gleichen magnetischen Rotorruheposition (P) positioniert ist, wobei die Magnetfeldsensoren (16, 18) lokal das rotierende Erregerfeld erfassen und entsprechende Triggersignale (TSO, TNO) erzeugen,
eine Motorsteuereinheit (20), die die Statorspule (42) zum Antreiben des Motorrotors (14) erregt, wobei die Motorsteuereinheit (20) durch ein Triggersignal (TSO, TNO) getriggert wird, das von einem der Magnetfeldsensoren (16, 18) bereitgestellt wird, um ein rotierendes Statorfeld zu erzeugen, und
eine Umschalteinheit (22) mit einem analogen Betriebsmodussteuerelement (44, 44'), wobei die Umschalteinheit (22) elektrisch mit den beiden Magnetfeldsensoren (16, 18) und mit der Motorsteuereinheit (20) verbunden ist,
wobei die Umschalteinheit (22) entweder das Triggersignal (TSO) des Startbetriebmagnetfeldsensors (16) oder das Triggersignal (TNO) des Nennbetriebmagnetfeldsensors (18) an die Motorsteuereinheit (20) bereitstellt, und wobei der Schaltzustand (SSO, SNO) der Umschalteinheit (22) durch das analoge Betriebsmodussteuerelement (44, 44') gesteuert wird.

2. Elektronisch kommutierter Elektromotor (10) nach Anspruch 1, wobei das Betriebsmodussteuerelement (44) ein Zeitgeberelement ist, das den Schaltzustand der Umschalteinheit (22) zeitabhängig steuert.

3. Elektronisch kommutierter Elektromotor (10) nach einem der vorhergehenden Ansprüche, wobei die beiden statischen Magnetfeldsensoren (16, 18) radial außerhalb des Motorrotors (14) angeordnet sind, vorzugsweise auf dem gleichen Radius.

4. Elektronisch kommutierter Elektromotor (10) nach einem der vorhergehenden Ansprüche, wobei die Magnetfeldsensoren (16, 18) Hall-Sensoren sind.

5. Elektronisch kommutierter Elektromotor (10) nach einem der vorhergehenden Ansprüche, wobei die Umschalteinheit (22) mindestens zwei Halbleiterschalter (46, 48) umfasst.

6. Elektronisch kommutierter Elektromotor (10) nach einem der vorhergehenden Ansprüche, wobei das Betriebsmodussteuerelement (44, 44') der Umschalteinheit einen Widerstand (50, 64, 66) und einen Kondensator (52, 60, 62) umfasst.

7. Verfahren zum Steuern des Starts eines elektronisch kommutierten Elektromotors (10) mit den Merkmalen des Anspruchs 1, das die folgenden Motorstartschritte umfasst:
• Starten der Umschalteinheit (22) derart, dass nur das Triggersignal (TSO) des Startbetriebmagnetfeldsensors (16) an die Motorsteuereinheit (20) bereitgestellt wird,
• Starten des Betriebsmodussteuerelements (44, 44') der Umschalteinheit (22),
• Erregen der Statorspule (42), getriggert durch das Triggersignal (TSO) des Startbetriebmagnetfeldsensors (16), bis das Betriebsmodussteuerelement (44, 44') der Umschalteinheit schaltet,
• Schalten der Umschalteinheit (22) derart, dass nur das Triggersignal (TNO) des Nennbetriebs-Magnetfeldsensors (18) an die Motorsteuereinheit (20) geliefert wird, und
• Erregen der Statorspule (42), getriggert durch das Triggersignal (TNO) des Nennbetriebmagnetfeldsensors (18).

## Revendications

1. Un moteur électrique à commutation électronique (10) qui comprend
un stator (12) avec un corps de stator (24) et une seule bobine de stator (42),
un rotor à aimant permanent (14) pouvant tourner relativement au stator (14) autour d'un axe de rotation (A) générant ainsi un champ d'excitation tournant, le rotor à aimant permanent (14) comprenant deux pôles magnétiques du rotor (N,S) séparés par une ligne de séparation des pôles du rotor (PS) et un axe central des pôles magnétiques (C) qui est substantiellement perpendiculaire à la ligne de séparation des pôles du rotor (PS), **caractérisé en ce que**
un senseur de champ magnétique statique de début de marche (16) et un senseur de champ magnétique statique de marche nominale (18) sont tous deux arrangés à distance l'un de l'autre de manière à ce que le senseur de champ magnétique de marche nominale (18) soit positionné avant une position d'arrêt magnétique du rotor (P), qui est définie par la projection de l'axe des pôles magnétiques (C) sur le corps du stator (24) dans une position de rotor à couple de coïncidence nul du rotor à aimant permanent (14), et que le senseur de champ magnétique de début de marche (16) est positionné après la même position d'arrêt magnétique du rotor (P), les senseurs de champ magnétique (16,18) détectant localement le champ d'excitation tournant et générant les signaux de déclenchement correspondants (TSO,TNO),
une unité de contrôle du moteur (20) énergisant la bobine du stator (42) pour entraîner le rotor du moteur (14), l'unité de contrôle du moteur (20) étant déclenchée par un signal de déclenchement (TSO,TNO) fourni par l'un des capteurs de champ magnétique (16,18) pour générer un champ tournant du stator, et
une unité de commutation (22) avec un élément de contrôle du mode de fonctionnement analogique (44,44'), l'unité de commutation (22) étant connectée électriquement aux deux senseurs de champ magnétique (16,18) et à l'unité de commande du moteur (20),
dans lequel l'unité de commutation (22) fournit soit le signal de déclenchement (TSO) du capteur de champ magnétique de début de marche (16), soit le signal de déclenchement (TNO) du capteur de champ magnétique de marche nominale (18) à l'unité de commande du moteur (20), et dans lequel l'état de commutation (SSO,SNO) de l'unité de commutation (22) est commandé par l'élément de commande de mode de fonctionnement analogique (44,44').

2. Le moteur électrique à commutation électronique (10) de la revendication 1, dans lequel l'élément de contrôle du mode de fonctionnement (44) est un élément de minuterie contrôlant en fonction du temps l'état de commutation de l'unité de commutation (22).

3. Le moteur électrique à commutation électronique (10) de l'une des revendications précédentes, dans lequel les deux senseurs de champ magnétique statique (16, 18) sont positionnés radialement à l'extérieur du rotor du moteur (14) préférablement au même radius.

4. Le moteur électrique à commutation électronique (10) de l'une des revendications précédentes, dans lequel les capteurs de champ magnétique (16,18) sont des capteurs à effet Hall.

5. Le moteur électrique à commutation électronique (10) de l'une des revendications précédentes, dans lequel l'unité de commutation (22) comprend au moins deux commutateurs à semi-conducteur (46,48).

6. Le moteur électrique à commutation électronique (10) de l'une des revendications précédentes, dans lequel l'élément de commande du mode de fonctionnement de l'unité de commutation (44,44') comprend une résistance (50,64,66) et un condensateur (52,60,62).

7. Une méthode de contrôle du démarrage d'un moteur électrique à commutation électronique (10) ayant les caractéristiques de la revendication 1, comprenant les marches de démarrage du moteur suivantes :
- démarrage de l'unité de commutation (22) de sorte que seul le signal de déclenchement (TSO) du senseur de champ magnétique de début de marche (16) est fourni à l'unité de contrôle du moteur (20),
- démarrage de l'élément de contrôle du mode de fonctionnement (44,44') de l'unité de commutation (22),
- énergiser la bobine du stator (42) déclenchée par le signal de déclenchement (TSO) du senseur de champ magnétique de début de marche (16) jusqu'à ce que l'élément de contrôle du mode de fonctionnement de l'unité de commutation (44,44') commute,
- commuter l'unité de commutation (22) de sorte que seul le signal de déclenchement (TNO) du senseur de champ magnétique en marche nominale (18) soit fourni à l'unité de contrôle du moteur (20), et
- énergiser la bobine du stator (42) déclenchée par le signal de déclenchement (TNO) du senseur de champ magnétique en marche nominale (18).
